# EUROPÄISCHE PATENTSCHRIFT

(11) **EP 1 727 669 B1**
(45) Veröffentlichungstag und Bekanntmachung des Hinweises auf die Patenterteilung: **18.07.2007**
(21) Anmeldenummer: 05707532.7
(22) Anmeldetag: 19.02.2005
(51) Int. Cl.: B32B 3/02, E04C 2/02, B29C 45/16

(54) **VERBUNDBAUTEIL**
COMPOSITE PART
ELEMENT COMPOSITE

(30) Priorität: 05.03.2004 DE 102004010810
(43) Veröffentlichungstag der Anmeldung: 06.12.2006
(73) Patentinhaber: Bayer MaterialScience AG, 51368 Leverkusen (DE)
(72) Erfinder: WILKENS, Reiner, 51381 Leverkusen (DE); ERKELENZ, Reiner, 51147 Köln (DE); LAMMECK, Adolf, 53797 Lohmar (DE); KLOCKE, Martin, 40215 Düsseldorf (DE); KONEJUNG, Klaus, 51467 Bergisch Gladbach (DE)
(86) Internationale Anmeldenummer: PCT/EP2005/001747
(87) Internationale Veröffentlichungsnummer: WO 2005/087483

(56) Entgegenhaltungen:
- DE-U1- 20 211 026
- US-A- 4 985 106
- US-A1- 2001 038 229
- US-B1- 6 231 944

## Beschreibung

Die Erfindung betrifft ein Verbundbauteil mit Sandwichstruktur, welches wenigstens aus einer Kemschicht besteht, die zwischen zwei Deckschichten angeordnet ist. Ein Gießharzsystem durchdringt die Schichten wenigstens teilweise und die Schichten sind mittels Verpressen miteinander verbunden. Die Erfindung betrifft ferner ein Verfahren zur Herstellung eines solchen Verbundbauteils.

Leichtbau-Verbundbauteile mit Sandwichstruktur, bestehend aus einer Kernschicht mit Waben- oder Wellenstruktur, z.B. aus Papier, Aluminium oder Kunststoff, und einer unteren und oberen Deckschicht aus Fasermatten, z.B. aus Natur-, Glas-, Kunststoff- oder Kohlenstofffasern, sind z.B. aus EP 1 319 503 A bekannt. Sie werden aufgrund ihres geringen Flächengewichtes und ihrer hohen Biegesteifigkeit bei geringer Wandstärke beispielsweise im Automobilbau als Innenverkleidung eingesetzt. Die Fasermatten der unteren und oberen Deckschicht sind z.B. mit einem Zweikomponenten-Polyurethan(PUR)-System benetzt, welches teilweise oder vollständig in die Kernschicht eindringt. Das PUR-System, welches z.B. leicht aufschäumend sein kann, sorgt für die Formgebung und die Verbindung der Deckschichten mit der Kernschicht.

Die Fertigung dieser Sandwich-Verbundbauteile erfolgt nach dem Formpressverfahren. Die Sandwichstruktur aus Kernschicht und Deckschichten wird beidseitig flächendeckend mit dem Zweikomponenten-PUR-System besprüht und in das auf im Allgemeinen 60 bis 160°C, bevorzugt 120 bis 140°C, geheizte Formwerkzeug eingelegt und verpresst. Nach dem Entformen und Abkühlen können die Verbundbauteile je nach Bedarf z.B. gestanzt, gefräst oder kaschiert werden.

Die Integration von Anschraubverbindungen, partiellen Metallverstärkungen, Verbindungselementen, Befestigungselementen o.dgl. ist nur begrenzt möglich. Beispielsweise können bei der Herstellung des Verbundbauteils im Presswerkzeug die Einleger entsprechend positioniert und beim Verpressen durch das aufschäumende und aushärtende PUR-System mit dem Verbundbauteil verbunden werden. Die Einleger können auch vollständig in das Verbundbauteil eingeschlossen werden, indem eine Deckschicht, z.B. eine Fasermatte, über den Einleger gelegt wird und beim Verpressen auf den Einleger gepresst wird.

Es ist ferner bekannt, Formteile, z.B. aus Kunststoff, an das Leichtbau-Verbundbauteil mittels Schweißen zu fügen. Dies ist jedoch vergleichsweise aufwändig, da die Formteile zunächst separat hergestellt werden und anschließend zum Verschweißen in ein Schweißwerkzeug eingelegt werden. Außerdem ist die Qualität der Schweißverbindung stark von den verwendeten Materialien abhängig.

Des Weiteren ist bekannt, derartige Sandwich-Verbundbauteile mit leicht fließenden Materialien wie Polyurethan zu umspritzen. Nachteilig an diesen mit PUR angespritzten Verbundbauteilen ist die vergleichsweise geringe Steifigkeit und Festigkeit. Außerdem ist das gezielte Anspritzen einzelner Bereiche des Verbundbauteils mit dem vernetzenden PUR-Harzsystem aufwändig. Gratbildung in dem angespritzten PUR erfordert ferner aufwändiges Nacharbeiten. Schließlich genügt eine angespritzte PUR-Oberfläche bei gewissen Anwendungen nicht den optischen Ansprüchen und kann nicht eingefärbt werden.

Die Aufgabe der vorliegenden Erfindung liegt darin, ausgehend von den aus dem Stand der Technik bekannten Leichtbau-Verbundbauteilen mit Sandwichstruktur ein Verbundbauteil zu schaffen, welches zur Integration von Funktionselementen und Formteilen, insbesondere aus thermoplastischem Kunststoff mit Hilfe des Spritzgießverfahrens, geeignet ist.

Gegenstand der Erfindung ist ein Verbundbauteil auf Basis einer Sandwichstruktur, wenigstens bestehend aus
(a) zwei Deckschichten, welche unabhängig voneinander aus jeweils wenigstens einer Folie, Platte, Fasermatte und/oder einem Schaum aus Metall, Kunststoff, Glas, Naturstoff und/oder Kohlenstoff bestehen, und
(b) einer zwischen den Deckschichten angeordneten Kernschicht aus Metall, Kunststoff, Naturstoff und/oder Papier mit einer Vielzahl von Hohlräumen,
wobei ein Gießharzsystem die Deckschichten und die Kernschicht wenigstens teilweise durchdringt und die Deckschichten mit der Kernschicht durch Verpressen verbunden sind, dadurch gekennzeichnet, dass wenigstens in einem Bereich der Sandwichstruktur die Deckschichten gegeneinander verpresst sind und die Sandwichstruktur in dem verpressten Bereich mit thermoplastischem Kunststoff umspritzt ist.

Das erfindungsgemäße Verbundbauteil besteht wenigstens aus drei Schichten: einer Kemschicht und zwei Deckschichten zu beiden Seiten der Kernschicht. Ein Aufbau aus einer mehrlagigen Kernschicht und aus mehrlagigen Deckschichten ist ebenso möglich. Die Kernschicht besteht aus Metall, Kunststoff, Naturstoff und/oder Papier. Bevorzugte Metalle sind Aluminium, Magnesium und ihre Legierungen. Bevorzugte Kunststoffe sind Polyamid, Polyester, Polycarbonat, Polypropylen, Polystyrol, ABS, Polyamid-Imid (PAI) und Mischungen daraus. Die Kunststoffe können verstärkt oder unverstärkt, gefüllt oder ungefüllt sein. Beispiele für Naturstoffe sind Holz, Flachs, Sisal, Jute, Hanf. Unter Papier ist im Sinne der vorliegenden Erfindung jegliche Art von Papier zu verstehen, wie z.B. mehrschichtiges Papier, z.B. Pappe, oder harzgetränktes Papier.

Als wesentliches Merkmal weist die Kernschicht des erfindungsgemäßen Verbundbauteils eine Vielzahl von Hohlräumen auf. Die Hohlräume können von beliebiger geometrischer Form sein. Sie können z.B. eckige oder runde Kanäle, Poren oder Blasen sein. Die Hohlräume können regelmäßig oder unregelmäßig angeordnet sein. Vorzugsweise hat die Kemschicht ein gewelltes, gewinkeltes, wabenförmiges oder schaumartiges Profil. Die Kernschicht kann z.B. ein Wellblech oder eine Wellpappe sein. Analog zu einem Wellblech oder einer Wellpappe kann die Kernschicht auch anstatt gewellt gewinkelt, z.B. mit einer Rechteckform oder Dreieckform, sein. Außerdem kann analog zu einem Wellblech oder einer Wellpappe die Kemschicht auch aus Kunststoff sein. Ein gewinkeltes oder gewelltes Kunststoff-Profil kann z.B. extrudiert sein. Als Kernschicht aus Kunststoff kann beispielsweise eine-Stegplatte verwendet werden.

Die Dicke der Kernschicht liegt vorzugsweise im Bereich von 5 bis 50 mm. Aufgrund der Vielzahl von Hohlräumen ist das Gewicht der Kernschicht im Verhältnis zu ihrer Dicke gering. Die Dichte beträgt vorzugsweise 10 bis 1000 kg/m³.

Die Deckschichten zu beiden Seiten der Kernschicht des erfindungsgemäßen Verbundbauteils bestehen unabhängig voneinander aus Metall, Kunststoff, Glas, Naturstoff und/oder Kohlenstoff. Die Deckschichten sind Folien, Platten, Fasermatten und/oder Schäume. Fasermatten können z.B. Netze, Gewebe, Gewirke, Geflechte, Vliese oder Filze sein. Bevorzugte Metalle für die Deckschichten sind Aluminium, Magnesium und ihre Legierungen. Bevorzugte Kunststoffe sind Polyamid, Polyester, Polycarbonat, Polypropylen, Polystyrol, ABS, PAI und Mischungen daraus. Naturstoffe für die Deckschichten können z.B. Flachs, Sisal, Jute und Hanf sein. Die Deckschichten zu beiden Seiten der Kemschicht können gleich oder verschieden sein.

Die Dicke der Deckschichten beträgt vorzugsweise 0,1 bis 2 mm. Das Flächengewicht der Deckschichten beträgt bevorzugt 225 bis 1.200 g/m².

Ein Gießharzsystem durchdringt die Deckschichten und die Kernschicht des erfindungsgemäßen Verbundbauteils wenigstens teilweise. Dies bedeutet, dass das Gießharzsystem die Hohlräume der Kernschicht teilweise oder vollständig ausfüllt. Ebenso durchdringt das Gießharzsystem die Fasern sowie Poren, Hohlräume o.dgl. der Deckschichten, wenn diese aus Fasermatten oder Schäumen bestehen. Handelt es sich bei den Deckschichten um Folien oder Platten, so befindet sich das Gießharzsystem zwischen den Deckschichten und der Kemschicht und benetzt die Deckschichten teilweise oder vollständig. Das Gießharzsystem dient der Verbindung der Schichten miteinander, welche vor dem Aushärten des Gießharzsystems unter Wärme verpresst werden. Bei faserförmigen Deckschichten übernimmt das Gießharzsystem gleichzeitig die Fixierung der Fasern sowie die Ausbildung der Oberfläche des Verbundbauteils. Es verleiht dem Verbundbauteil insbesondere eine hohe Festigkeit und Biegesteifigkeit durch die Verbindung der Schichten miteinander. Dieser Verbund wenigstens bestehend aus einer Kernschicht, zwei Deckschichten und einem Gießharzsystem, ist aus dem Stand der Technik bekannt (z.B. EP 1 319 503 A) und wird im Sinne der vorliegenden Erfindung nachfolgend auch als Sandwichstruktur bezeichnet.

Das Gießharzsystem kann ein Ein- oder Mehrkomponentensystem, z.B. ein Zweikomponentensystem, sein. Es kann aufschäumend oder nicht-aufschäumend sein. Beispiele für mögliche Gießharzsysteme sind: Polyurethan(PUR)-Systeme, Polyesterharzsysteme, Epoxidharzsysteme, Acrylharzsysteme. Bevorzugt wird ein Zweikomponenten-PUR-System eingesetzt, besonders bevorzugt ein Zweikomponenten-PUR-System wie es in EP 1 319 503 A, Seite 2, Zeile 26 bis Seite 3, Zeile 20 beschrieben ist. Vorzugsweise beträgt das Flächengewicht des ausgehärteten Zweikomponenten-PUR-Systems 400 bis 1.200 g/m².

Das Flächengewicht der aus dem Stand der Technik bekannten Sandwichstruktur beträgt bevorzugt 2.100 bis 3.600 g/m².

Erfindungsgemäß sind wenigstens in einem Bereich der Sandwichstruktur des Verbundbauteils die Deckschichten gegeneinander verpresst und die Sandwichstruktur ist in dem verpressten Bereich mit thermoplastischem Kunststoff umspritzt. Das gegeneinander Verpressen der Deckschichten der Sandwichstruktur im Sinne der vorliegenden Erfindung bedeutet, dass die Sandwichstruktur so weit zusammengepresst wird, bis die Deckschichten praktisch einander berühren. Die zwischen den Deckschichten befindliche Kernschicht wird dabei auf ein Minimum zusammengedrückt.

Das Verpressen der Deckschichten gegeneinander erlaubt es, thermoplastischen Kunststoff im Spritzgießverfahren mit der Sandwichstruktur zu verbinden. Bei der aus dem Stand der Technik bekannten Sandwichstruktur ohne die gegeneinander verpressten Deckschichten tritt das Problem auf, dass beim Anspritzen des thermoplastischen Kunststoffs an die Sandwichstruktur aufgrund des hohen Spritzdruckes sich der Kunststoff unkontrolliert in die Kernschicht ausbreitet und dadurch die Sandwichstruktur verformt oder beschädigt. Da nach dem erfindungsgemäßen Verpressen der Deckschichten gegeneinander die Deckschichten praktisch aneinander anliegen, kann die Kunststoffschmelze beim Anspritzen nicht mehr zwischen die Deckschichten in die Kernschicht fließen. Das gegeneinander Verpressen verhindert somit, dass die Kunststoffschmelze beim Anspritzen unkontrolliert in die Kemschicht eindringt und aufgrund des für die Verarbeitung von thermoplastischem Kunststoff notwendigen hohen Spritzdrucks die Kemschicht verformt oder beschädigt. Auch verhindert das Verpressen der Deckschichten gegeneinander eine unkontrollierte Überspritzung des Verbundbauteils, da die Kunststoffschmelze nur in dem Bereich der gegeneinander verpressten Deckschichten in den Hohlraum des Spritzgießwerkzeuges eindringen kann. In den übrigen, nicht verpressten Bereichen liegt das Verbundbauteil an der Innenwand der Werkzeugkavität an, wodurch die Werkzeugkavität gegen eine unkontrollierte Ausbreitung der Kunststoffschmelze abgedichtet ist.

Die Deckschichten können z.B. in einem Randbereich der Sandwichstruktur des Verbundbauteils gegeneinander verpresst und mit thermoplastischem Kunststoff umspritzt sein. So kann die Sandwichstruktur teilweise oder umlaufend mit einem umspritzten Rand aus thermoplastischem Kunststoff versehen sein. Die Deckschichten des Verbundbauteils können bei der Herstellung jedoch auch in einem beliebigen anderen Bereich gegeneinander verpresst werden, je nach dem, in welchem Bereich das Verbundbauteil mit thermoplastischem Kunststoff umspritzt wird. Weist das Verbundbauteil z.B. Durchbrüche auf, können beispielsweise die Ränder der Durchbrüche verpresst und mit thermoplastischem Kunststoff umspritzt sein. Auch Sicken und andere Verformungen in der Oberfläche des Verbundbauteils können verpresst und mit Kunststoff umspritzt sein.

Es ist andererseits auch möglich, die Kunststoffschmelze in einem Bereich des Verbundbauteils gezielt in die Kernschicht eintreten zu lassen, was einen Hinterschnitt und damit einen formschlüssigen Verbund zwischen der Sandwichstruktur und dem thermoplastischen Kunststoff erzeugt. Dies kann beispielsweise dadurch erfolgen, dass in einigem Abstand vom Rand der Sandwichstruktur oder eines Durchbruches die Deckschichten des Verbundbauteils, z.B. ringförmig um den Druchbruch herum, gegeneinander verpresst werden. Beim Anspritzen tritt die Kunststoffschmelze über den offenen, d.h. nicht verpressten, Rand des Durchbruchs in die Kernschicht ein. Durch das Verpressen kann sich die Kunststoffschmelze jedoch nicht unkontrolliert in der Kernschicht ausbreiten, sondern nur maximal bis zu dem verpressten Bereich, z.B. um den Durchbruch herum.

Der thermoplastische Kunststoff, mit dem die Sandwichstruktur mittels Spritzgießen umspritzt ist, ist bevorzugt ein unverstärkter, verstärkter und/oder gefüllter Kunststoff auf Basis von Polyamid (PA), Polyester, insbesondere Polyethylenterephthalat (PET), Polybutylenterephthalat (PBT), Polystyrol (PS), Acrylnitril-Butadien-Styrol (ABS), thermoplastisches Polyurethan (TPU), Polyolefin, insbesondere Polypropylen (PP), Polyethylen (PE), Polycarbonat (PC), Polypropylenoxid (PPO), Polysulfon (PSO), Polyphenylensulfid (PPS), Polyimid (PI), Polyetheretherketon (PEEK) oder einer Mischung dieser Kunststoffe.

Das Umspritzen der Sandwichstruktur, bestehend aus Kemschicht und Deckschichten mit Gießharzsystem, mit thermoplastischem Kunststoff erlaubt es, die Steifigkeit und Festigkeit der Sandwichstruktur zu erhöhen. Außerdem können in vielfältiger Weise an beliebigen Stellen, z.B. am Rand oder auf der Fläche, Funktionselemente, wie Verstärkungs-, Versteifungs- oder Verbindungselemente, an die Sandwichstruktur angespritzt werden. Dadurch lassen sich Formteile oder Bauteile aus anderen Materialien, z.B. Metall, verhältnismäßig einfach mit dem erfindungsgemäßen Verbundbauteil verbinden. Dadurch ist es möglich, das erfindungsgemäße Verbundbauteil auf verhältnismäßig einfache Weise in ein Gesamtsystem aus mehreren gleichen oder verschiedenen Formteilen oder Bauteilen zu integrieren. Auch mehrere Formteile in der Art des erfindungsgemäßen Verbundbauteils können auf diese Weise miteinander verbunden werden.

Ein weiterer Gegenstand der Erfindung besteht in einem Verfahren zur Herstellung des erfindungsgemäßen Verbundbauteils, wobei das Verfahren durch die folgenden Schritte gekennzeichnet ist:
(i) Einlegen der Kemschicht und der Deckschichten in ein Presswerkzeug, wobei die Kernschicht zwischen den Deckschichten angeordnet ist
(ii) Auftragen des Gießharzsystems auf wenigstens eine der Deckschichten, wobei die Schritte (i) und (ii) in beliebiger Reihenfolge erfolgen
(iii) Verpressen der Kemschicht mit den Deckschichten zu der Sandwichstruktur sowie Verpressen der Deckschichten gegeneinander in wenigstens einem Bereich der Sandwichstruktur
(iv) Entformen der gemäß Schritt (iii) verpressten Sandwichstruktur
(v) Einlegen der verpressten Sandwichstruktur in ein Spritzgießwerkzeug und Anspritzen von thermoplastischem Kunststoff an die Sandwichstruktur in dem Bereich der gegeneinander verpressten Deckschichten.

Die aus dem Stand der Technik bekannte Sandwichstruktur des erfindungsgemäßen Verbundbauteils wird mit Hilfe des Formpressverfahrens hergestellt, d.h. die Deckschichten sind mit der Kernschicht durch, insbesondere vollflächiges, Verpressen verbunden (hierin Schritt (iii)). Dabei wird vor dem Verpressen das Gießharzsystem in flüssigem Zustand, insbesondere vollflächig, auf wenigstens eine Deckschicht aufgebracht (Schritt (ii)). Das Aufbringen des Gießharzsystems kann z.B. durch Versprühen erfolgen. Das Aufbringen des Gießharzsystems (Schritt (ii)) kann in dem Presswerkzeug nach dem Einlegen der Deckschichten und der Kernschicht (Schritt (i)) erfolgen oder außerhalb des Presswerkzeugs vor dem Einlegen der Deckschichten und der Kernschicht. In dem Presswerkzeug wird die Kernschicht zwischen den Deckschichten angeordnet (Schritt (i)) und anschließend verpresst (Schritt (iii)). Die Durchführung des Verfahrens ist beispielsweise in EP 1 319 503 A beschrieben.

Vor dem Aushärten des Gießharzsystems werden die Deckschichten der Sandwichstruktur erfindungsgemäß in einem gewünschten Bereich, z.B. im Randbereich, gegeneinander verpresst (Schritt (iii)). Das Verpressen der Kemschicht mit den Deckschichten zum Verbinden der Schichten miteinander sowie das Verpressen der Deckschichten gegeneinander in ausgewählten Bereichen erfolgt gleichzeitig oder nacheinander in einem Presswerkzeug. Das gegeneinander Verpressen der Deckschichten erfolgt vorteilhafterweise in dem gleichen Presswerkzeug wie das Verpressen der Deckschichten und der Kernschicht miteinander zur Herstellung der Sandwichstruktur an sich. Es ist jedoch prinzipiell ebenso möglich, die beiden Teilschritte in verschiedenen Presswerkzeugen nacheinander auszuführen. Nach dem Aushärten, ggf. Abkühlen und Entformen (Schritt (iv)) wird die verpresste Sandwichstruktur in ein Spritzgießwerkzeug gelegt und in dem Spritzgießwerkzeug in den Bereichen der gegeneinander verpressten Deckschichten mit thermoplastischem Kunststoff umspritzt (Schritt (v)).

Das erfindungsgemäße Verbundbauteil kann beispielsweise im Automobilbau für Elemente von Türverkleidungen, Fahrzeugböden, Instrumententafeln, Instrumententafelträgern sowie horizontalen Karosserieteilen, aber auch für Elemente von Möbeln oder Haushaltsgeräten eingesetzt werden. Der an die verpresste Sandwichstruktur angespritzte thermoplastische Kunststoff kann ein Funktionselement, z.B. eine Verstärkungsrippe, sein.

Die Erfindung wird nachfolgend anhand der beigefügten Zeichnungen näher erläutert. Es zeigen
- Figur 1: ein schematischer Querschnitt eines Ausschnitts des erfindungsgemäßen Verbundbauteils im Spritzgießwerkzeug nach dem Anspritzen des thermoplastischen Kunststoffs in einem verpressten Randbereich
- Figur 2: ein schematischer Querschnitt eines Ausschnitts des erfindungsgemäßen Verbundbauteils im Spritzgießwerkzeug nach dem Anspritzen des thermoplastischen Kunststoffs in einem verpressten Randbereich, wobei der Kunststoff in einem nicht verpressten Bereich in die Kernschicht eindringt
- Figur 3: ein schematischer Querschnitt eines Ausschnitts des erfindungsgemäßen Verbundbauteils im Spritzgießwerkzeug nach dem Anspritzen des thermoplastischen Kunststoffs im Bereich eines verpressten Durchbruchs in dem Verbundbauteil

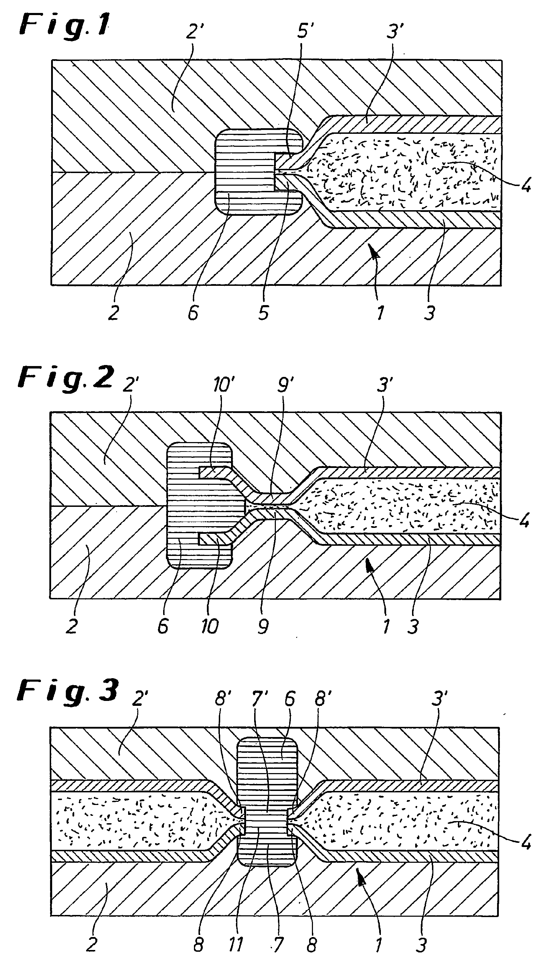

In Figur 1 befindet sich das erfindungsgemäße Verbundbauteil 1 zwischen den beiden Werkzeughälften 2, 2' des Spritzgießwerkzeugs (nicht dargestellt). Das Verbundbauteil 1 ist aus zwei Deckschichten 3, 3' und einer Kernschicht 4 mit z.B. wabenförmiger Struktur aufgebaut. Die Kernschicht 4 ist zwischen den beiden Deckschichten 3, 3' angeordnet. In der in Figur 1 dargestellten Ausführungsform des Verbundbauteils 1 sind die Deckschichten 3, 3' in ihrem Randbereich 5, 5' gegeneinander verpresst, so dass die Deckschichten 3, 3' praktisch aneinander anliegen. Die zwischen den Deckschichten 3,3' befindliche Kemschicht 4 ist in dem verpressten Randbereich 5, 5' praktisch vollständig zusammengepresst. In dem verpressten Randbereich 5, 5' ist das Verbundbauteil 1 mit thermoplastischem Kunststoff 6 umspritzt. Der thermoplastische Kunststoff 6 dringt nicht zwischen die gegeneinander verpressten Deckschichten 3, 3' in die Kernschicht 4 des Verbundbauteils 1 ein.

Im Unterschied zu der in Figur 1 gezeigten Ausführungsform sind in der in Figur 2 dargestellten Ausführungsform die beiden Deckschichten 3, 3' nicht unmittelbar im Randbereich 10, 10' gegeneinander verpresst, sondern in einem Bereich 9, 9', der sich in einigem Abstand vom Rand 10, 10' befindet. Beim Anspritzen von thermoplastischem Kunststoff 6 an das Verbundbauteil 1 im nicht verpressten Randbereich 10, 10' dringt thermoplastischer Kunststoff 6 in die Kernschicht 4, d.h. zwischen die Deckschichten 3, 3', ein. Der thermoplastische Kunststoff 6 dringt so weit in die Kernschicht 4 ein, bis der verpresste Bereich 9, 9' erreicht ist. Der angespritzte Kunststoff 6 erzeugt so einen Hinterschnitt. In dem Bereich 9, 9' der gegeneinander verpressten Deckschichten 3, 3' dringt der Kunststoff 6 nicht weiter in die Kemschicht 4 ein. Der verpresste Bereich 9, 9' verhindert eine weitere, insbesondere unkontrollierte, Ausbreitung der Kunststoffschmelze 6 in der Kernschicht 4.

Figur 3 zeigt eine weitere Ausführungsform des Verbundbauteils 1, welches sich zwischen zwei Werkzeughälften 2, 2' des Spritzgießwerkzeugs (nicht dargestellt) befindet. Die Deckschichten 3, 3' weisen übereinander liegende Durchbrüche 7, 7' auf. Die Kernschicht weist ebenfalls einen Durchbruch 11 in dem Bereich der übereinander liegenden Durchbrüche 7, 7' auf. Die Deckschichten 3, 3' sind an ihren umlaufenden Rändern 8, 8' der Durchbrüche 7, 7' gegeneinander verpresst. Die übereinander liegenden Durchbrüche 7, 7', 11 sind mit thermoplastischem Kunststoff 6 umspritzt, so dass der Kunststoff 6 eine formschlüssige Verbindung mit dem Verbundbauteil 1 bildet.

In einer anderen, nicht dargestellten Ausführungsform ist es z.B. außerdem möglich, den umspritzten thermoplastischen Kunststoff mit einem Durchbruch zu versehen.

### Beispiel:

Die Sandwichstruktur wurde aus einer Papierwabe der Dicke 6 mm mit einem Flächengewicht von ca. 1.000 g/m² als Kernschicht sowie zweier Glasfasermatten mit einem Flächengewicht von je ca. 400 g/m² zu beiden Seiten der Kemschicht gebildet. Die Schichten waren mit einem Polyurethan-Gießharzsystem aus Polyol und Diisocyanat (Baypreg F^{®}, Bayer AG, Deutschland) mit einem Flächengewicht von ca. 400 g/m² durch Verpressen in einem Presswerkzeug miteinander verbunden. Das Flächengewicht der so hergestellten Sandwichstruktur betrug 2.630 g/m² (Dichte 0,4 g/cm³).

Beim Verpressen der Schichten miteinander in dem Presswerkzeug wurden gleichzeitig, d.h. in einem Arbeitsschritt, die Deckschichten der Sandwichstruktur in ihrem äußeren Randbereich vor dem Aushärten des Polyurethan-Gießharzsystems gegeneinander verpresst. Nach dem Aushärten des PUR-Harzes wurde das Formteil entformt und in ein Spritzgießwerkzeug eingelegt. In dem verpressten Randbereich wurde in dem Spritzgießwerkzeug Polyamid 6 GF 30 an die Sandwichstruktur angespritzt. Die Dicke des angespritzten Kunststoffs betrug 6 mm. Die Dicke des Verbundbauteils insgesamt betrug 6 mm, die Dichte betrug ca. 0,7 g/cm³, das Flächengewicht betrug ca. 4.400 g/m². Der angespritzte thermoplastische Kunststoff drang nicht in die Kernschicht zwischen die Deckschichten ein.

## Patentansprüche

1. Verbundbauteil auf Basis einer Sandwichstruktur, wenigstens bestehend aus
(a) zwei Deckschichten (3, 3'), welche unabhängig voneinander aus jeweils wenigstens einer Folie, Platte, Fasermatte und/oder einem Schaum aus Metall, Kunststoff, Glas, Naturstoff und/oder Kohlenstoff bestehen, und
(b) einer zwischen den Deckschichten (3, 3') angeordneten Kemschicht (4) aus Metall, Kunststoff, Naturstoff und/oder Papier mit einer Vielzahl von Hohlräumen,
wobei ein Gießharzsystem die Deckschichten (3, 3') und die Kemschicht (4) wenigstens teilweise durchdringt und die Deckschichten (3, 3') mit der Kemschicht (4) durch Verpressen verbunden sind, **dadurch gekennzeichnet, dass** wenigstens in einem Bereich (5, 5', 8, 8', 9, 9') der Sandwichstruktur die Deckschichten (3, 3') gegeneinander verpresst sind und die Sandwichstruktur in dem verpressten Bereich (5, 5', 8, 8', 9, 9') mit thermoplastischem Kunststoff (6) umspritzt ist.

2. Verbundbauteil nach Anspruch 1, **dadurch gekennzeichnet, dass** die Kernschicht (b) eine gewellte, gewinkelte, wabenförmige oder schaumartige Struktur hat.

3. Verbundbauteil nach einem der Ansprüche 1 oder 2, **dadurch gekennzeichnet, dass** die Deckschichten (a) Fasermatten sind.

4. Verbundbauteil nach einem der Ansprüche 1-3, **dadurch gekennzeichnet, dass** das Gießharzsystem ein Zweikomponenten-Polyurethan-System ist.

5. Verbundbauteil nach einem der Ansprüche 1-4, **dadurch gekennzeichnet, dass** die Deckschichten (a) im Randbereich der Sandwichstruktur gegeneinander verpresst sind und der verpresste Randbereich mit thermoplastischem Kunststoff umspritzt ist.

6. Verbundbauteil nach einem der Ansprüche 1-5, **dadurch gekennzeichnet, dass** die Deckschichten (a) im Bereich eines Durchbruches, einer Sicke oder Verformung der Sandwichstruktur gegeneinander verpresst sind und der verpresste Bereich mit thermoplastischem Kunststoff umspritzt ist.

7. Verbundbauteil nach einem der Ansprüche 1-6, **dadurch gekennzeichnet, dass** der umspritzte thermoplastische Kunststoff nahe dem Bereich der gegeneinander verpressten Deckschichten (a) die Hohlräume der Kernschicht (b) wenigstens teilweise derart ausfüllt, dass er einen Hinterschnitt bildet.

8. Verbundbauteil nach einem der Ansprüche 1-7, **dadurch gekennzeichnet, dass** der thermoplastische Kunststoff ein unverstärkter, verstärkter und/oder gefüllter Kunststoff auf Basis von Polyamid (PA), Polyester, insbesondere Polyethylenterephthalat (PET), Polybutylenterephthalat (PBT), Polystyrol (PS), Acrylnitril-Butadien-Styrol (ABS), thermoplastisches Polyurethan (TPU), Polyolefin, insbesondere Polypropylen (PP), Polyethylen (PE), Polycarbonat (PC), Polypropylenoxid (PPO), Polysulfon (PSO), Polyphenylensulfid (PPS), Polyimid (PI), Polyetheretherketon (PEEK) oder einer Mischung dieser Kunststoffe ist.

9. Verfahren zur Herstellung eines Verbundbauteils nach einem der Ansprüche 1-8, **gekennzeichnet durch** die folgenden Schritte:
(i) Einlegen der Kernschicht und der Deckschichten in ein Presswerkzeug, wobei die Kernschicht zwischen den Deckschichten angeordnet ist
(ii) Auftragen des Gießharzsystems auf wenigstens eine der Deckschichten, wobei die Schritte (i) und (ii) in beliebiger Reihenfolge erfolgen
(iii) Verpressen der Kernschicht mit den Deckschichten zu der Sandwichstruktur sowie Verpressen der Deckschichten gegeneinander in wenigstens einem Bereich der Sandwichsturktur
(iv) Entformen der gemäß Schritt (iii) verpressten Sandwichstruktur
(v) Einlegen der verpressten Sandwichstruktur in ein Spritzgießwerkzeug und Anspritzen von thermoplastischem Kunststoff an die Sandwichstruktur in dem Bereich der gegeneinander verpressten Deckschichten.

## Claims

1. Composite component based on a sandwich structure, consisting at least of
(a) two outer layers (3, 3'), which mutually independently each consist of at least one film, sheet, fibre mat and/or foam made from metal, plastic, glass, natural material and/or carbon, and
(b) a core (4) positioned between the outer layers (3, 3'), made from metal, plastic, natural material and/or paper having a large number of cavities,
wherein a casting resin system at least partially penetrates the outer layers (3, 3') and the core (4) and the outer layers (3, 3') are bonded to the core (4) by press moulding, **characterised in that** in at least one area (5, 5', 8, 8', 9, 9') of the sandwich structure the outer layers (3, 3') are pressed together and the compressed area (5, 5', 8, 8', 9, 9') of the sandwich structure is encapsulated with thermoplastic polymer (6).

2. Composite component according to claim 1, **characterised in that** the core (b) has a corrugated, angled, honeycomb or foam-like structure.

3. Composite component according to one of claims 1 or 2, **characterised in that** the outer layers (a) are fibre mats.

4. Composite component according to one of claims 1 to 3, **characterised in that** the casting resin system is a two-component polyurethane system.

5. Composite component according to one of claims 1 to 4, **characterised in that** the outer layers (a) are pressed together in the edge area of the sandwich structure and the compressed edge area is encapsulated with thermoplastic polymer.

6. Composite component according to one of claims 1 to 5, **characterised in that** the outer layers (a) are pressed together in the area of an opening, a bead or deformation in the sandwich structure and the compressed area is encapsulated with thermoplastic polymer.

7. Composite component according to one of claims 1 to 6, **characterised in that** the encapsulated thermoplastic polymer near the area of the outer layers (a) that have been pressed together at least partially fills the cavities in the core (b) in such a way that it forms an undercut.

8. Composite component according to one of claims 1 to 7, **characterised in that** the thermoplastic polymer is a non-reinforced, reinforced and/or filled polymer based on polyamide (PA), polyester, particularly polyethylene terephthalate (PET), polybutylene terephthalate (PBT), polystyrene (PS), acrylonitrile-butadiene-styrene (ABS), thermoplastic polyurethane (TPU), polyolefin, in particular polypropylene (PP), polyethylene (PE), polycarbonate (PC), polypropylene oxide (PPO), polysulfone (PSO), polyphenylene sulfide (PPS), polyimide (PI), polyether ether ketone (PEEK) or a mixture of these polymers.

9. Process for the production of a composite component according to one of claims 1 to 8, **characterised by** the following steps:
(i) Inserting the core and the outer layers into a compression mould, the core being positioned between the outer layers,
(ii) Applying the casting resin system to at least one of the outer layers, steps (i) and (ii) being performed in any order,
(iii) Press moulding the core with the outer layers to form the sandwich structure and pressing the outer layers together in at least one area of the sandwich structure,
(iv) Removing the sandwich structure press moulded according to step (iii) from the mould,
(v) Inserting the press moulded sandwich structure into an injection mould and injection moulding thermoplastic polymer onto the sandwich structure in the area where the outer layers have been pressed together.

## Revendications

1. Elément composite à base d'une structure en sandwich, constituée de au moins :
(a) deux couches de recouvrement (3, 3'), qui sont constituées indépendamment l'une de l'autre de respectivement au moins une feuille, une plaque, un matelas de fibres et/ou une mousse en métal, plastique, verre, substance naturelle et/ou carbone et
(b) d'une couche centrale (4) disposée entre les couches de recouvrement (3, 3'), constituée de métal, de plastique, de substance naturelle et/ou de papier avec une multitude de cavités,
le système de résine de moulage pénétrant au moins partiellement dans les couches de recouvrement (3, 3') et la couche centrale (4), et les couches de recouvrement (3, 3') étant assemblées avec la couche centrale (4) par compression, **caractérisé en ce que** les couches de recouvrement (3, 3') sont compressées les unes contre les autres dans au moins une zone (5, 5', 8, 8', 9, 9') de la structure en sandwich et la structure en sandwich est encastrée par injection avec du plastique thermoplastique (6) dans la zone compressée (5, 5', 8, 8', 9, 9').

2. Elément composite selon la revendication 1, **caractérisé en ce que** la couche centrale (b) a une structure ondulée, plissée, en nid d'abeille ou de type mousse.

3. Elément composite selon l'une des revendications 1 ou 2, **caractérisé en ce que** les couches de recouvrement (a) sont des matelas de fibres.

4. Elément composite selon l'une des revendications 1 - 3, **caractérisé en ce que** le système de résine de moulage est un système en polyuréthane bicomposant.

5. Elément composite selon l'une des revendications 1 - 4, **caractérisé en ce que** les couches de recouvrement (a) sont compressées l'une contre l'autre dans la zone périphérique de la structure en sandwich et que la zone périphérique compressée est encastrée par injection avec du plastique thermoplastique.

6. Elément composite selon l'une des revendications 1 - 5, **caractérisé en ce que** les couches de recouvrement (a) sont compressées l'une contre l'autre dans la zone périphérique d'un passage, d'une moulure ou d'une déformation de la structure en sandwich et que la zone compressée est encastrée par injection avec du plastique thermoplastique.

7. Elément composite selon l'une des revendications 1 - 6, **caractérisé en ce que** le plastique thermoplastique encastré par injection près de la zone des couches de recouvrement compressées l'une contre l'autre (a) remplit au moins partiellement les cavités de la couche centrale (b) de manière à former une section arrière.

8. Elément composite selon l'une des revendications 1 - 7, **caractérisé en ce que** le plastique thermoplastique est un plastique non renforcé, renforcé et/ou chargé à base de polyamide (PA), de polyester, en particulier de polyéthylène téréphtalate (PET), de polybutylène téréphtalate (PBT), de polystyrène (PS), d'acrylonitrile - butadiène - styrène (ABS), de polyuréthane thermoplastique (TPU), de polyoléfine, en particulier de polypropylène (PP), de polyéthylène (PE), de polycarbonate (PC), d'oxyde de polypropylène (PPO), de polysulfone (PSO), de sulfure de polyphénylène (PPS), de polyimide (PI), de polyétheréthercétone (PEEK) ou d'un mélange de ces plastiques.

9. Procédé de fabrication d'un élément composite selon l'une des revendications 1 à 8, **caractérisé par** les étapes suivantes :
(i) insertion de la couche centrale et des couches de recouvrement dans un outil de compression, la couche centrale étant disposée entre les couches de recouvrement
(ii) application du système de résine fluide sur au moins une des couches de recouvrement, les étapes (i) et (ii) se succédant de manière quelconque
(iii) compression de la couche centrale avec les couches de recouvrement en une structure en sandwich ainsi que compression des couches de recouvrement l'une contre l'autre au moins dans une zone de la structure en sandwich
(iv) démoulage de la structure en sandwich compressée selon l'étape (iii)
(v) insertion de la structure en sandwich compressée dans un outil de moulage par injection et injection du plastique thermoplastique sur la structure en sandwich dans la zone des couches de recouvrement compressées l'une contre l'autre.
